Europäisches Patentamt

European Patent Office

Office européen des brevets

(11) Veröffentlichungsnummer: **0 266 555**
**A1**

(12) **EUROPÄISCHE PATENTANMELDUNG**

(21) Anmeldenummer: 87114263.4

(22) Anmeldetag: 30.09.87

(51) Int. Cl.⁴ **B60T 8/36**

(30) Priorität: 03.11.86 DE 3637415

(43) Veröffentlichungstag der Anmeldung:
**11.05.88 Patentblatt 88/19**

(84) Benannte Vertragsstaaten:
**BE DE FR IT NL SE**

(71) Anmelder: **KNORR-BREMSE AG**
**Moosacher Strasse 80 Postfach 401060**
**D-8000 München 40(DE)**

(72) Erfinder: **Eckert, Ferdinand**
**Hummelgasse 14**
**D-8050 Freising(DE)**

(54) **Drucksteuerventil, insbesondere für Blockierschutzeinrichtungen von Kraftfahrzeugen.**

(57) Bei einem Drucksteuerventil, insbesondere für Blockierschutzeinrichtungen von Kraftfahrzeugen, sind die Membranen (15) von Halteventilen (7) und Auslaßventilen (9) gehäuseaußenseitig jeweils durch einen Deckel (21) aus Kunststoff abgedeckt, wobei zwischen Deckel und Membrane jeweils ein Vorsteuerraum (17) gebildet ist; der Vorsteuerraum (17) steht über im Deckel befindliche Durchgangs-und Kanalverbindungen mit einem Vorsteuerkanal in Verbindung. Sowohl der Deckel als auch die Membrane sind in Einbaulage des Drucksteuerventils senkrecht ausgerichtet, wobei der Vorsteuerkanal vorzugsweise am tiefsten Einspannpunkt der Membrane mit dem Inneren des Deckels in Verbindung steht, derart, daß eine gute Ableitungsmöglichkeit für Kondensat existiert.

Fig. 2

EP 0 266 555 A1

## Drucksteuerventil, insbesondere für Blockierschutzeinrichtungen von Kraftfahrzeugen

Die Erfindung betrifft ein Drucksteuerventil nach dem Gattungsbegriff des Patentanspruches 1.

Drucksteuerventile der gattungsgemäßen Art als 1-Kanal-Drucksteuerventile für Blockierschutzanlagen von Kraftfahrzeugen weisen in ihrem Inneren je ein Halteventil, ein Auslaßventil, ein Vorsteuerventil für das Halteventil und ein Vorsteuerventil für das Auslaßventil auf. Die Vorsteuerventile sind als Magnetventile ausgelegt und tragen dazu bei, daß mit Hilfe des Drucksteuerventils eine gesteuerte Betätigung der an das Ventil angeschlossenen Bremszylindereinrichtung des Fahrzeugs erzielt wird. Bei bekannten Drucksteuerventilen sind bereits Verschlüsse in Form von Deckeln für das Auslaßventil und das Halteventil bekannt. Die Deckel sind im allgemeinen aus Aluminium-Guß hergestellt, wobei in den Deckeln Bohrungen zum Einleiten von Druckluft in Vorsteuerräume vorgesehen sein können. Die Deckel sind verhältnismäßig teuer in der Herstellung als auch in der erforderlichen Nachbearbeitung.

Davon ausgehend besteht die Aufgabe der Erfindung darin, für das Halteventil und das Auslaßventil von Drucksteuerventilen der in Rede stehenden Art Abdeckungen d.h. Deckel zu schaffen, welche vom Material und von der Fertigung her preislich günstig liegen und welche es im Bedarfsfalle vereinfachen, Kanäle oder Querverbindungen bzw. Durchgänge für das Einleiten von Druckluft in den sogenannten Vorsteuerraum vorzusehen. Es soll fernerhin möglich sein, derartige Deckel in einfacher Weise am Gehäuse des Drucksteuerventils zu fixieren, ohn daß eine Vielzahl von durchgehenden Befestigungsbolzen oder dergleichen Befestigungselementen erforderlich wäre. Schließlich sollen die Deckel in ihrer Formgebung so ausgebildet sein, daß es auf einfache Weise möglich ist, anfallendes Kondensat vom tiefsten Punkt des Vorsteuerraums abzuleiten.

Zur Lösung dieser Aufgabe dienen die Merkmale nach dem Kennzeichnungsteil des Patentanspruches 1. Vorteilhafte Ausgestaltungen und Weiterbildungen sind in den weiteren Unteransprüchen aufgeführt.

Die Ausbildung des Deckels aus Kunststoff z.b. als Kunststoffspritzteil vereinfacht den Aufbau des Drucksteuerventils in kostensparender Weise, da derartige Kunststoff-Deckel bereits beim Spritzen berücksichtigte Durchgänge bzw. Querkanäle aufweisen können, wobei einseitig offene Querkanäle durch zusätzliche Kunststoff-Verschlußteile abgedeckt sein können.

Der Erfindung ist nachfolgend anhand von Ausführungsbeispielen unter Bezugnahme auf die beigefügte Zeichnung erläutert.

Fig. 1 ist eine Seitenansicht eines Drucksteuerventils nach der Erfindung, und

Fig.2 ist eine von oben gesehene, teilweise im Schnitt wiedergegebene Ansicht des Ventils von Linie II-II in Fig.1.

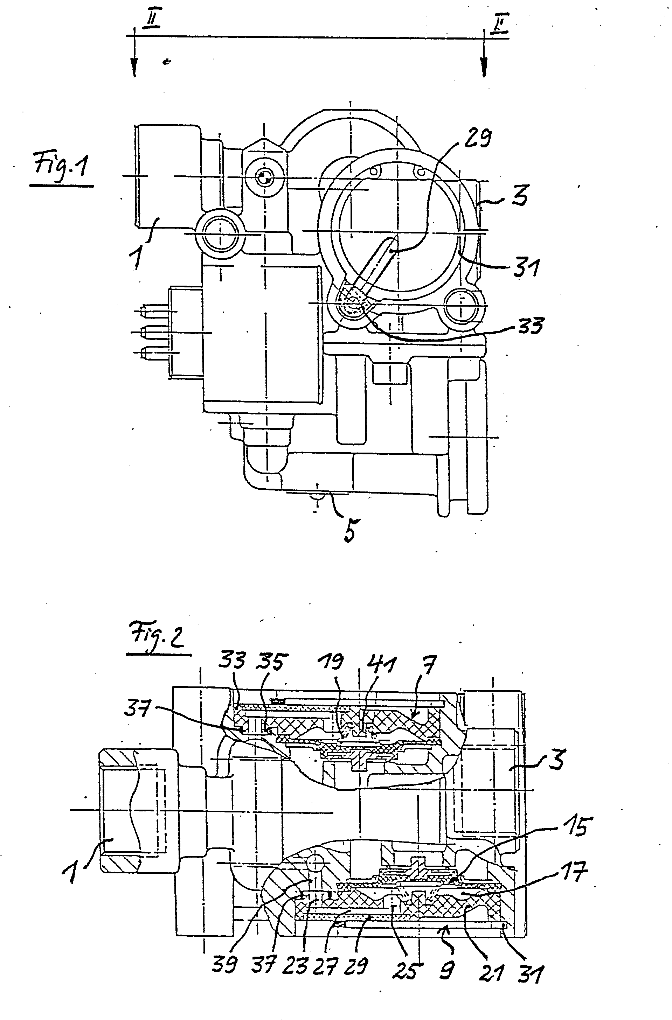

Das in der Zeichnung dargestellte Drucksteuerventil nach der Erfindung weist in bekannter Weise einen mit einem Betriebsbremsventil verbundenen Anschluß 1, einen mit einer Bremszylindereinrichtung verbundenen Anschluß 3 und einen gemäß Fig.1 an der Unterseite befindlichen Entlüftungsanschluß 5 auf. Im Inneren des Ventils sind ein Halteventil 7, ein Auslaßventil 9 und zwei (nicht dargestellte) Vorsteuerventile 11 und 13 vorgesehen. Eines der Vorsteuerventile ist dem Auslaßventil zugeordnet, während das andere Vorsteuerventil funktionell dem Halteventil zugeordnet ist.

Sowohl das Halteventil 7 als auch das Auslaßventil 9 arbeiten jeweils mit einer Membrane 15, welche an ihrer Außenseite durch einen Vorsteuerraum 17 begrenzt ist. Die Membrane 15 ist bei beiden Ventilen durch eine Feder 19 verspannt, die sich an einem Deckel 21 abstützt.

Gemäß der Erfindung sind die Membranen im Ventil, bezogen auf dessen Einbaulage, senkrecht ausgerichtet, so daß auch die Vorsteuerräume 17 entsprechende senkrechte Baulagen aufweisen. Die Deckel 21 sind aus Kunststoff gefertigt, d.h. sie bestehen beispielsweise als Kunststoffspritzteil. In den beiden Deckeln 21 befinden sich bei dem dargestellten Ausführungsbeispiel zwei parallel zur Deckelachse sich erstreckende Durchgänge 23 und 25, die durch einen senkrecht zur Deckelachse verlaufenden Kanal 27 miteinander verbunden sind. Beide Durchgänge als auch der Kanal werden bereits beim Spritzen berücksichtigt, d.h. sie werden nicht durch Bohr-oder Fräsarbeiten gefertigt. Der Kanal 27, welcher im Querschnitt U-förmig sein kann, ist durch ein zusätzliches Verschlußteil 29, gleichfalls aus Kunststoff bestehend, verschlossen. Die Verbindung des Deckels 21 mit dem Verschlußteil 29 geschieht vorzugsweise durch Ultraschallschweißung.

Die beiden Deckel 21 werden im dargestellten Ausführungsbeispiel jeweils mit Hilfe eines Seegerrings 31 am Gehäuse des Drucksteuerventils gehalten. An den beiden Deckeln ist im Bereich des Durchgangs 23 je eine Lasche 33 ausgebildet, welche mit einem Fortsatz 35 und einer den Fortsatz umgebenden Dichtung 37 in einer Bohrung des Gehäuses eingeführt sind. Hierbei steht die Dichtung 37 unter radialer Verpressung; auf diese Weise wird eine Krafteinwirkung vermieden, die bei axialer Verpressung von Dichtelementen immer vorhanden ist und welche ein Aufbiegen der Lasche 33 bewirken würde.

Die Durchgänge 23,25 und die Kanäle 27 verbinden jeweils den Vorsteuerraum 17 mit einem Steuerkanal 39, der sich im Inneren des Drucksteuerventils zum jeweils zugeordneten Vorsteuerventil erstreckt und dazu dient, Druckluft in den Vorsteuerraum ein-bzw. aus diesem abzulassen, derart, daß die an sich bekannten Funktionen mit Hilfe des Drucksteuerventils ausgeübt werden.

Fig.1 der Zeichnung veranschaulicht, daß die Lasche 33 des Auslaßventils 9 lediglich eine Versetzung von etwa 30 Grad gegenüber dem tiefsten Punkt am Umfang der Membrane besitzt. Hierdurch wird sichergestellt, daß ausfallendes Kondensat verhältnismäßig schnell nach unten, d.h. in Richtung des Entlüftungsanschlusses 5 ablaufen kann. Wie Fig.2 veranschaulicht, mündet der Durchgang 25 nahe der Abstützung der Feder 19 in den Vorsteuerraum 17. Nach einer bevorzugten Ausführungsform kann der Durchgang 23 zentral in den Führungszapfen 41 für die Feder 19 gelegt sein, so daß sich bei Einleiten von Druckluft eine absolut zentrale Beaufschlagung der Membrane 15 ergibt.

Um eine vollständige Entwässerung des Vorsteuerraums 17 erreichen zu können, ist bei einer Weiterbildung des Drucksteuerventils der jeweils unterste Bereich am Umfang der Membrane 5 nicht gegenüber dem Deckel und dem Ventilgehäuse eingespannt, sondern mittels eines (nicht dargestellten) Bypaßkanals mit dem Steuerkanal verbunden. Der Vorsteuerraum 17 wird hierdurch zweifach beaufschlagt, nämlich durch den vorzugsweise zentral angeordneten Durchgang 25 und durch den Bypaßkanal am untersten Umfangsbereich der Membrane. In jedem Falle ist hierdurch sichergestellt, das Kondensat aus dem unteren Bereich des Vorsteuerraumes ablaufen kann, falls die vom untersten Bereich der Membrane abzweigende Kanalführung ihrerseits vorzugsweise vertikal oder möglichst vertikal ausgerichtet verläuft und sich in Richtung des Entlüftungsanschlusses erstreckt.

Bezugszeichenliste

1 Anschluß
3 Anschluß
5 Entlüftungsanschluß
7 Halteventil
9 Auslaßventil
11 Vorsteuerventil
13 Vorsteuerventil
15 Membrane
17 Vorsteuerraum
19 Feder
21 Deckel
23 Durchgang
25 Durchgang
27 Kanal
29 Verschlußteil
31 Seegerring
33 Lasche
35 Fortsatz
37 Dichtung
39 Steuerkanal
41 Führungszapfen

## Ansprüche

1. Drucksteuerventil, insbesondere für Blockierschutzeinrichtungen von Kraftfahrzeugen, mit wenigstens einem Halte-und einem Auslaßventil, welchen jeweils Magnet-Vorsteuerventile zugeordnet sind, wobei das Halte-und das Auslaßventil als Ventilkörper je eine Membrane aufweisen, welche durch Einleiten von Druckluft in einen Vorsteuerraum beaufschlagbar ist, dadurch gekennzeichnet, daß die Membranen (15) des Halte-und des Auslaßventils (7,9) gehäuseaußenseitig jeweils durch einen Deckel (21) aus Kunststoff abgedeckt sind, derart, daß der Vorsteuerraum (17) zwischen der Membrane (15) und dem Deckel (21) ausgebildet ist.

2. Drucksteuerventil nach Anspruch 1, dadurch gekennzeichnet, daß die Membrane (15) und der Deckel (21) in der Einbaulage des Drucksteuerventils senkrecht ausgerichtet sind.

3. Drucksteuerventil nach Anspruch 1 oder 2, dadurch gekennzeichnet, daß sich im Deckel (21) Kanäle und Durchgänge für das Einleiten von Druckluft in den Vorsteuerraum befinden.

4. Drucksteuerventil nach einem der vorangehenden Ansprüche, dadurch gekennzeichnet, daß die Kanäle und Durchgänge im Spritzgußverfahren im Deckel ausgebildet sind.

5. Drucksteuerventil nach einem der vorangehenden Ansprüche, gekennzeichnet durch zwei parallel zur Deckelachse unter Abstand sich im Deckel erstreckende Durchgänge (23,25), welche durch einen in Querrichtung verlaufenden Kanal (27) miteinander verbunden sind.

6. Drucksteuerventil nach Anspruch 5, dadurch gekennzeichnet, daß der Kanal (27) an der Außenseite des Deckels als offene Ausnehmung besteht und durch ein Verschlußteil (29), gleichfalls aus Kunststoff bestehen, abgedeckt ist.

7. Drucksteuerventil nach Anspruch 6, dadurch gekennzeichnet, daß das Verschlußteil (29) durch Ultraschallschweißung mit dem Deckel (21) verbunden ist.

8. Drucksteuerventil nach einem der vorangehenden Ansprüche, bei welchem jeweils ein Vorsteuerkanal an die Durchgänge und an den Kanal im Inneren des Deckels angeschlossen ist und somit mit dem Vorsteuerraum zwischen Deckel und Membrane in Verbindung steht, dadurch gekennzeichnet, daß der Vorsteuerkanal vorzugsweise am lagetiefsten Punkt des Umfangs der Membrane an das Deckelinnere angeschlossen ist.

9. Drucksteuerventil nach Anspruch 1, dadurch gekennzeichnet, daß der Deckel (21) jeweils mittels eines Seegerringes (31) gegenüber dem Gehäuse des Drucksteuerventils fixiert ist.

10. Drucksteuerventil nach Anspruch 9, dadurch gekennzeichnet, daß der Deckel (21) im wesentlichen Scheibenform besitzt und eine auskragende Lasche (33) aufweist, in welcher sich der mit dem Vorsteuerkanal in Verbindung stehende Durchgang erstreckt, wobei die Lasche (33) unter Verwendung einer radial verpreßten Dichtung (37) gegenüber einer Aufnahmebohrung im Gehäuse des Drucksteuerventils verspannt ist.

Fig. 1

Fig. 2

Europäisches
Patentamt

**EUROPÄISCHER RECHERCHENBERICHT**

Nummer der Anmeldung

EP 87 11 4263

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 444 594 (KNORR) <br> * Seite 6, Zeile 35 - Seite 7, Zeile 10; Seite 6, Zeilen 9-13; Figuren 1,2 * <br> --- | 1,3,4,9 | B 60 T 8/36 |
| A | GB-A-2 059 018 (BOSCH) <br> * Seite 1, Zeilen 100-103, Zeile 125 - Seite 3, Zeile 3; Figuren 1,2 * <br> --- | 1,3,4,7,9,10 | |
| A | FR-A-2 401 804 (BOSCH) <br> * Seite 2, Zeilen 29-32; Figuren 1,2 * <br> --- | 1,3 | |
| A | EP-A-0 060 545 (KNORR) <br> * Seite 15, Zeilen 19,20; Figur 8 * <br> --- | 1,3 | |
| A | FR-A-2 227 476 (MAROCCO) <br> * Seite 7, Zeilen 20-29; Figur 12 * <br> --- | 5,6,10 | |
| A | FR-A-2 359 348 (GRANDCLEMENT) <br> * Seite 3, Zeilen 33-40 * <br> ----- | 7 | |
| | | | **RECHERCHIERTE SACHGEBIETE (Int. Cl.4)** <br><br> B 60 T <br> F 16 K |

Der vorliegende Recherchenbericht wurde für alle Patentansprüche erstellt

| Recherchenort | Abschlußdatum der Recherche | Prüfer |
|---|---|---|
| DEN HAAG | 04-02-1988 | BLURTON M.D |